# EUROPEAN PATENT APPLICATION

(11) **EP 2 866 434 A1**
(43) Date of publication of application: **29.04.2015**
(21) Application number: 14190663.6
(22) Date of filing: 28.10.2014
(51) Int. Cl.: H04N 5/232, H04N 5/235

(54) **Imaging apparatus**

(30) Priority: 28.10.2013 JP 2013223522
(71) Applicant: CANON KABUSHIKI KAISHA, Ohta-ku Tokyo 146-8501 (JP)
(72) Inventor: Asano, Ayumu, Ohta-ku, Tokyo (JP)
(74) Representative: Northway, Daniel Robert

(57) **Abstract**

A surveillance camera (1000) which may communicate with a client apparatus (113) via a network includes an image capturing unit (101) configured to capture an image of a subject, a server (112) configured to receive a command for instructing enlargement of a dynamic range by synthesizing a plurality of images generated by the image capturing unit (101) from the client apparatus (113) via the network, a dark compensation unit (106) configured to set an exposure condition of the image capturing unit (101) and acquire data of one image generated by imaging a subject by the image capturing unit (101) under the set exposure condition, and a command processing unit (111) configured to cause the dark compensation unit (106) to operate in a case where a command is received by the server (112).

## Description

### BACKGROUND OF THE INVENTION

### Field of the Invention

The present invention relates to image processing for changing exposure of image.

### Description of the Related Art

Conventionally, a subject captured outdoors by an imaging apparatus inside of a room may be black in a captured image because its background is bright, and the subject may not be recognized easily.

In order to solve this problem, for example, backlight compensation may be performed. Performing backlight compensation may increase the brightness of a dark region of a subject, for example, in a captured image. However, because the brightness of a bright region of a background may also be increased, such a bright region may have overexposure, on the other hand.

Alternatively, in order to solve the problem, a wide dynamic range function may be used. This may generate a synthesized image with a wide dynamic range by imaging a subject a plurality of number of times by changing its shutter speed between a high speed and a low speed, for example.

Applying such a wide dynamic range function allows imaging a subject without occurrence of overexposure and underexposure even when there is a large brightness difference between a bright region and a dark region.

Further alternatively, Japanese Patent Laid-Open No. 2013-127818 discloses a method for compensating a dark region in a captured image, without synthesizing a plurality of images.

In an imaging apparatus such as a surveillance camera which transmits a captured image to an external apparatus, a group of commands for instructing to change settings of the imaging apparatus from the external apparatus and to start distribution of the image are implemented. Some command groups, for example, defined by the standard provided by ONVIF (Open Network Video Interface Forum) have been known recently.

Under the standard, Imaging service may be used for controlling BacklightCompensation and WideDynamicRange for control of a camera and image quality, for example.

However, the conventional technology defined by the standard provided by ONVIF does not assume setting of the function as disclosed in Japanese Patent Laid-Open No. 2013-127818 though it allows backlight compensation and setting of a wide dynamic range. This is because those functions are common in that a good image may be captured even in an imaging location having a brightness difference but are technically different.

Embodiments of the present invention address the forgoing points and may allow processing for changing exposure of image in response to a command for enabling the wide dynamic range function by operating a different function from the wide dynamic range function.

### SUMMARY OF THE INVENTION

The present invention provides an imaging apparatus as specified in claims 1 to 13.

Further preferred features of the present invention will become apparent from the following description of exemplary embodiments with reference to the attached drawings.

### BRIEF DESCRIPTION OF THE DRAWINGS

Fig. 1 illustrates an example of a hardware configuration of a surveillance camera according to a first embodiment of the present invention.
Fig. 2 illustrates an example of a screen for setting a wide dynamic range according to the first embodiment of the present invention.
Fig. 3 is a sequence diagram for explaining a command sequence of a surveillance camera and a client apparatus according to the first embodiment of the present invention.
Figs. 4A and 4B illustrate examples of a WideDynamicRange type definition according to the first embodiment of the present invention.
Fig. 5 is a flowchart describing processing for receiving a GetImagingSettings command according to the first embodiment of the present invention.
Fig. 6 is a flowchart describing processing for receiving a GetOptions command according to the first embodiment of the present invention.
Fig. 7 is a processing for receiving a SetImagingSettings command according to the first embodiment of the present invention.
Fig. 8 illustrates an example of a hardware configuration of a client apparatus according to the first embodiment of the present invention.

### DESCRIPTION OF THE EMBODIMENTS

Embodiments of the present invention will be described in detail below with reference to drawings.

The configurations according to the following embodiments are given for illustration purpose only, and the present invention is not limited to the illustrated configurations. It is assumed that commands according to the following embodiments are defined under Open Network Video Interface Forum (hereinafter, called ONVIF) standard, for example.

### First Embodiment

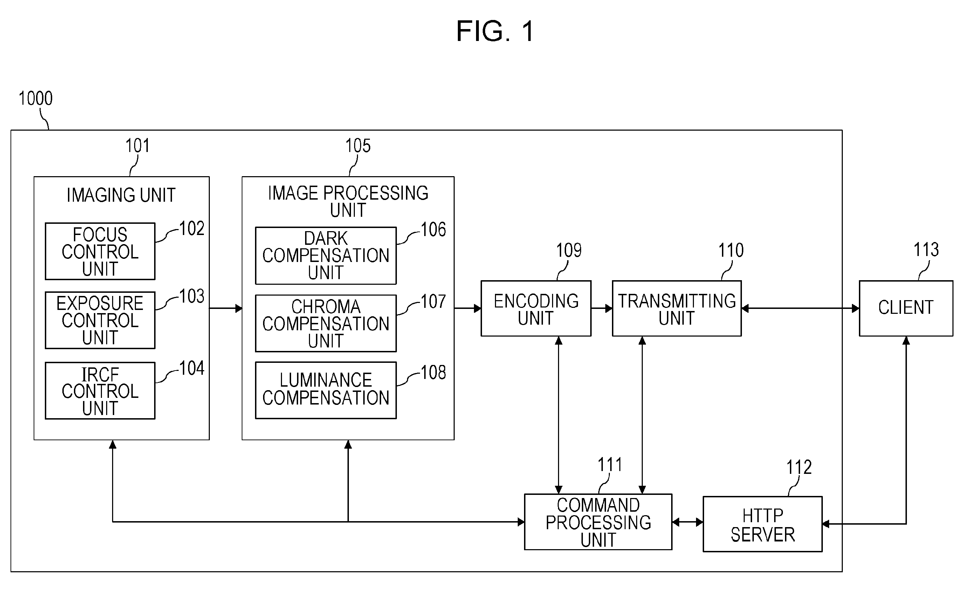

A surveillance camera 1000 corresponding to an image processing apparatus according to a first embodiment will be described with reference to Fig. 1 to Fig. 7. Fig. 1 illustrates an example of a hardware configuration of the surveillance camera 1000 which captures a moving image according to this embodiment. The surveillance camera 1000 in Fig. 1 includes an image capturing unit 101, an image processing unit 105, an encoding unit 109, a transmitting unit 110, command processing unit 111, and an HTTP server 112.

The command processing unit 111 in Fig. 1 generally controls the components of the surveillance camera 1000. The command processing unit 111 has a central processing unit (CPU). The command processing unit 111 executes a program stored in a storage unit contained in the command processing unit 111. Alternatively, the command processing unit 111 may use hardware to perform control.

For example, the command processing unit 111 may receive and analyze a command from the client apparatus 113 through the HTTP server 112. The command processing unit 111 controls the image capturing unit 101, image processing unit 105, encoding unit 109, and transmitting unit 110 in accordance with a result of the analysis.

Commands here transmitted/received between the surveillance camera 1000 and the client apparatus 113 have a format based on the ONVIF standard. It should be noted that a command under the ONVIF standard is defined by using XML Schema Definition language (hereinafter, which may be called XSD).

The image capturing unit 101 may include a lens (not illustrated), an image sensing device (not illustrated) such as a CCD and a CMOS, and an infrared cut filter (hereinafter, which may be called IRCF), not illustrated. The image capturing unit 101 operates these function units under control of the command processing unit 111.

A focus control unit 102 controls a focal point by controlling the lens included in the image capturing unit 101. The exposure control unit 103 may control an exposure time, for example, by controlling the image sensing device included in the image capturing unit 101. The IRCF control unit 104 controls insertion/removal of the IRCF to/from an imaging optical system included in the image capturing unit 101.

The image processing unit 105 includes a dark compensation unit 106, a chroma compensation unit 107, and a luminance compensation unit 108. The image processing unit 105 causes these function units to compensate color and so on of an image captured by the image capturing unit 101 under control of the command processing unit 111. The chroma compensation unit 107 compensates a color density of an image. The luminance compensation unit 108 compensates the brightness of a whole image output from the capturing unit 101.

The dark compensation unit 106 has a dark compensation function configured to analyze a histogram of one image output from the image capturing unit 101 and compensate tones of an excessively bright region and an excessively dark region of an image having a high brightness difference of a scene with backlight, for example. The dark compensation function is different from a wide dynamic range function.

Here, the wide dynamic range function refers to a function for synthesizing a plurality of images generated by an image capturing unit to enlarge the dynamic range of the synthesized image, for example.

The dark compensation unit 106 may allow setting of enable (ON) and disable (OFF) of the dark compensation function itself. Here, when the dark compensation function is enabled, the compensation level of the dark compensation may be manually designated to an arbitrary value. When the dark compensation function is enabled, the dark compensation unit 106 may automatically set the compensation level. In embodiments, the compensation level is used for compensating tones of an excessively bright region and/or an excessively dark region.

When the compensation level of the dark compensation function is manually designated, the value in a range from a minimum value of 1 to a maximum value of 100 may be designated as the compensation level.

Here, the dark compensation unit 106, chroma compensation unit 107, and luminance compensation unit 108 have influences on processes of each other. For example, when the luminance compensation unit 108 performs a process on an image output from the image capturing unit 101 before the dark compensation unit 106 performs a process thereon, a bright region of the image may possibly have overexposure due to some compensation values.

Accordingly, the components of the image processing unit 105 may change the compensation values and process details with reference to the set values of other compensation processes, and the image processing unit 105 may change a process sequence of the compensation processes, which however will not be mentioned in the description of this embodiment.

The encoding unit 109 encodes an image compensated by the image processing unit 105 with a predetermined resolution and image quality into a format such as H.264 or JPEG under control of the command processing unit 111.

The transmitting unit 110 has an RTSP server function. In response to a video streaming request from the client apparatus 113, the transmitting unit 110 transmits image data encoded by the encoding unit 109 via a network in accordance with a transfer method instructed by the client apparatus 113.

The client apparatus 113 has an RTSP client function. The client apparatus 113 requests the transmitting unit 110 to distribute an image. The client apparatus 113 has an interface for controlling a surveillance camera.

The client apparatus 113 generates a request in XML format provided under ONVIF standard for control to be performed. The client apparatus 113 uses POST method to transmit it to the HTTP server 112.

The HTTP server 112 transfers XML data transmitted from the client apparatus 113 to the command processing unit 111. The command processing unit 111 analyzes the XML-format data transferred from the HTTP server 112. The command processing unit 111 controls the corresponding components based on the result of the analysis.

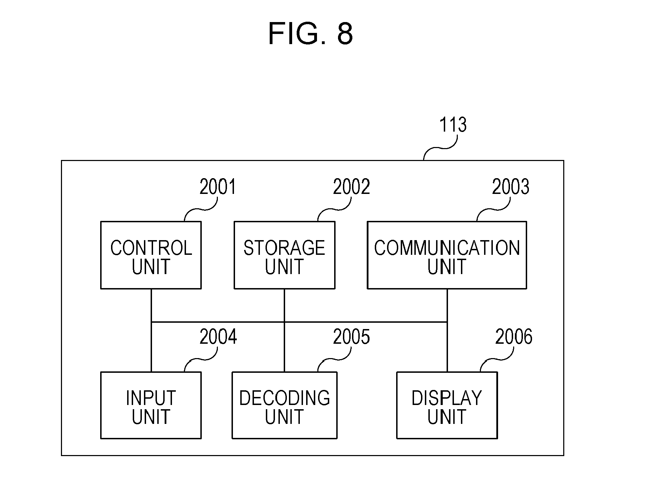

Fig. 8 illustrates an example of a hardware configuration of the client apparatus 113 according to this embodiment. The client apparatus 113 in this embodiment is configured as a computer apparatus connected to a network.

A control unit 2001 in Fig. 8 generally controls the client apparatus 113. The control unit 2001 may be configured by a CPU, for example and executes a program stored in a storage unit 2002, which will be described below. The control unit 2001 may use hardware to implement the control. The storage unit 2002 may be used as an area for storing a program to be executed by the control unit 2001, a work area for a program in execution, and a storage area for data.

A communicating unit 2003 may transmit a command to the surveillance camera 1000 in response to an instruction from the control unit 2001. The communicating unit 2003 may receive a response to a command and image data streaming distributed from the surveillance camera 1000.

An input unit 2004 may have a button, a cross key, a touch panel, and a mouse, for example. The input unit 2004 may receive an instruction from a user. For example, the input unit 2004 may receive an instruction to transmit a command to the surveillance camera 1000 as a user instruction.

If a command transmission instruction is input from a user to the surveillance camera 1000, the input unit 2004 notifies it to the control unit 2001. The control unit 2001 in response to the instruction input to the input unit 2004 generates a command to the surveillance camera 1000. Next, the control unit 2001 instructs the communicating unit 2003 to transmit the generated command to the surveillance camera 1000.

The input unit 2004 may further receive a user response to an inquiry message to a user. In this case, the inquiry message is generated by the control unit 2001 by executing a program stored in the storage unit 2002.

A decoding unit 2005 decodes and decompresses image data output from the communicating unit 2003. The decoding unit 2005 causes a display device 2006 to display the image corresponding to the decoded and decompressed image data. The display device 2006 may be caused to display a user inquiry message, for example, generated by the control unit 2001 by executing a program stored in the storage unit 2002.

The internal configuration of the surveillance camera 1000 and client apparatus 113 has been described above. The processing blocks illustrated Fig. 1 and Fig. 8 may be involved in embodiments of an image processing apparatus, an imaging apparatus, and an external apparatus according to the present invention, but the present invention is not limited thereto. Various modifications and changes such as inclusion of an audio input unit and an audio output unit may be made to such embodiments.

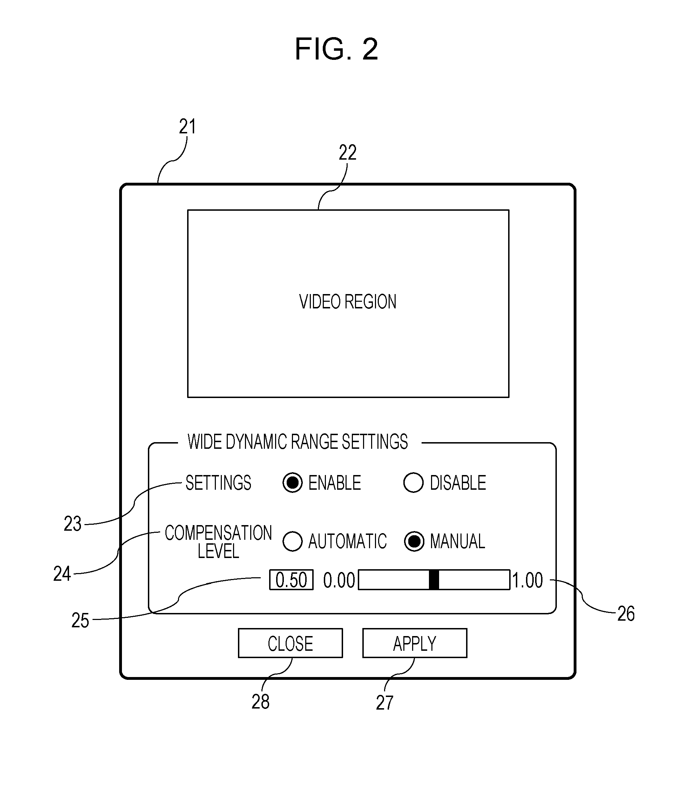

Fig. 2 illustrates an example of a wide-dynamic-range setting screen which is a user interface for setting a wide dynamic range in the client apparatus 113 according to this embodiment. The screen is displayed on the display device 2006 under control of the control unit 2001.

A window 21 in Fig. 2 is a window for prompting a user to define a wide dynamic range. The window 21 is booted up or displayed on the display device 2006 for defining a wide dynamic range. A video area 22 included in the window 21 displays an image corresponding to image data transmitted from the transmitting unit 110.

The client apparatus 113 starts up an RTSP client when the window 21 is booted up and requests the transmitting unit 110 including an RTSP server to transmit image data. Thus, a user who operates the client apparatus 113 may define a wide dynamic range by checking real time images transmitted from the surveillance camera 1000 and displayed on the video area 22.

The enable/disable of the wide dynamic range setting may be selected with a radio button 23 included in the window 21. If enabling the wide dynamic range setting is selected with the radio button 23, a radio button 24 for setting a compensation level of the wide dynamic range becomes selectable.

On the other hand, if disabling the wide dynamic range setting is selected with the radio button 23, the compensation level for the wide dynamic range is disabled to set. In order to indicate that, the radio button 24 is grayed out to inhibit the selection of the radio button 24.

In a case where the compensation level of the wide dynamic range is manually selected with the radio button 24, a slide bar 26 is enabled to operate for setting the compensation level of the wide dynamic range. The slide bar 26 may be moved to the right and left by a user to change the compensation level for the wide dynamic range. The changed compensation level may be displayed in a compensation level indication area 25.

On the other hand, in a case where the compensation level of the wide dynamic range is selected automatically with the radio button 24, the compensation level indication area 25 for indicating the value of the compensation level of the wide dynamic range is grayed out. Further, in this case, the slide bar 26 for setting the compensation level of the wide dynamic range is grayed out to indicate that it is disabled.

A minimum value and a maximum value settable as the compensation level of the wide dynamic range are indicated on the left and right side of the slide bar 26.

At a time when the window 21 is booted up for setting the wide dynamic range, the client apparatus 113 acquires the set value and settable values for the wide dynamic range from the surveillance camera 1000. The client apparatus 113 then reflects the acquired set value and the range of settable values to the statuses of the radio button 23, radio button 24, compensation level indication area 25, and slide bar 26.

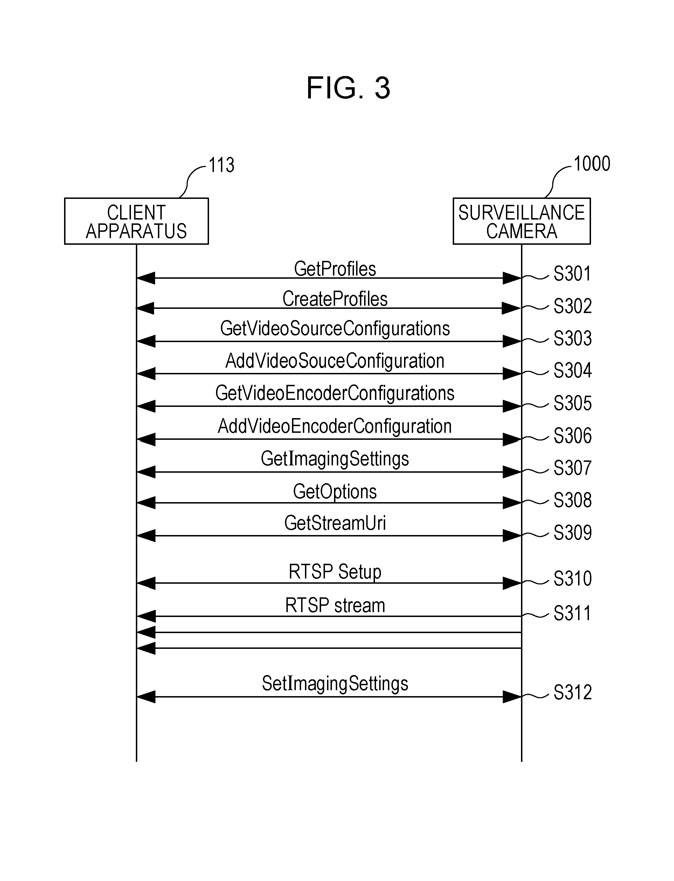

The client apparatus 113 displays, at the left and right of the slide bar 26, minimum and maximum values settable as the compensation level of the wide dynamic range based on the acquired settable values. This processing will be described in detail below with reference to Fig. 3.

A button 27 on the window 21 is usable for instructing to reflect the settings for wide dynamic range to the surveillance camera 1000. If a user presses down the button 27, the client apparatus 113 defines the set values defined on the window 21 to an XML tag and transmits it to the HTTP server 112. On the other hand, a button 28 is usable for exiting the window 21 to finish changing the settings for wide dynamic range.

Fig. 3 is a typical sequence diagram of an ONVIF command for booting up the window 21 for changing settings for wide dynamic range between the surveillance camera 1000 and the client apparatus 113.

In step S301 in Fig. 3, the client apparatus 113 transmits a GetProfiles command to the surveillance camera 1000. On the other hand, the surveillance camera 1000 having received the GetProfiles command transmits a MediaProfile list, which will be described below, to the client apparatus 113. Thus, the client apparatus 113 acquires the MediaProfile list from the surveillance camera 1000.

The client apparatus 113 further determines whether a proper MediaProfile with which VideoSource, which will be described below, and VideoEndoder, which will be described below, are associated exists in the acquired list or not.

If so, the client apparatus 113 performs processing in steps S302 to S306. If not, the client apparatus 113 on the other hand moves to step S307.

A MediaProfile corresponding to a distribution profile will be described below. The term "MediaProfile" refers to a parameter set for storing setting items in the surveillance camera 1000 in association with each other.

The setting items may include a ProfileToken that is an ID of the MediaProfile, a VideoSource, which will be described below, a VideoEncoder, which will be described below, and an audio encoder. The MediaProfile holds links to these setting items.

The term "VideoSource" refers to a set of parameters representing capabilities of one image capturing unit 101 included in the surveillance camera 1000. The VideoSource includes a VideoSourceToken that is an ID of the VideoSource and a Resolution indicating a resolution of image data that may be output by the image capturing unit 101. The VideoEncorder is a set of parameters representing encoder settings relating to compression coding of image data.

For example, the surveillance camera 1000 performs compression coding on image data output based on information in the VideoSource in accordance with the information in the VideoEncorder and distributes them to the client apparatus 113 through the transmitting unit 110.

Referring back to the sequence diagram in Fig. 3, in step S302, the client apparatus 113 transmits a CreateProfile command to the surveillance camera 1000 to request the surveillance camera 1000 to create a distribution profile. On the other hand, the surveillance camera 1000 having received the command returns to a response to the command.

Thus, the client apparatus 113 creates a new distribution profile within the surveillance camera 1000 and thus may acquire an ID of the created distribution profile. The surveillance camera 1000 stores the created new distribution profile.

In step S303, the client apparatus 113 transmits a GetVideoSourceConfigurations command to the surveillance camera 1000. On the other hand, the surveillance camera 1000 having received the GetVideoSourceConfigurations command returns to the client apparatus 113 a list of Tokens that are settable as a VideoSource held in the surveillance camera 1000.

In step S304, the client apparatus 113 designates proper ones of the ID acquired in step S302 and the Tokens returned in step S303 and transmits an AddVideoSourceConfiguration command to the surveillance camera 1000. The surveillance camera 1000 having received the command returns a response to the command to the client apparatus 113.

Thus, the client apparatus 113 is allowed to associate a desirable VideoSource corresponding to the designated Token with the MediaProfile corresponding to the designated distribution profile ID. On the other hand, the surveillance camera 1000 stores the MediaProfile and the desirable VideoSource in association.

In step S305, the client apparatus 113 transmits a GetVideoEncorderConfigurations command to the surveillance camera 1000. On the other hand, the surveillance camera 1000 having received the command returns a response to the command. Thus, the client apparatus 113 acquires a list including the list of Tokens of the VideoEncorder held in the surveillance camera 1000.

In step S306, the client apparatus 113 transmits an AddVideoEncorderConfiguration command to the surveillance camera 1000 to request the surveillance camera 1000 to add the VideoEncorder. It should be noted that the client apparatus 113 designates, in the command, proper ones of the IDs acquired in step S302 and the Tokens acquired in step S305.

On the other hand, the surveillance camera 1000 having received the command returns a response to the command to the client apparatus 113.

Thus, the client apparatus 113 is allowed to associate a desirable VideoEncorder corresponding to the designated Token with the MediaProfile corresponding to the designated distribution profile ID. On the other hand, the surveillance camera 1000 stores the MediaProfile and the VideoEncorder in association.

In step S307, the client apparatus 113 transmits a GetImagingSettings command to the surveillance camera 1000. It should be noted that the client apparatus 113 designates, in the command, a Token of the VideoSource set in the MediaProfile. On the other hand, the surveillance camera 1000 having received the command returns a response to the command.

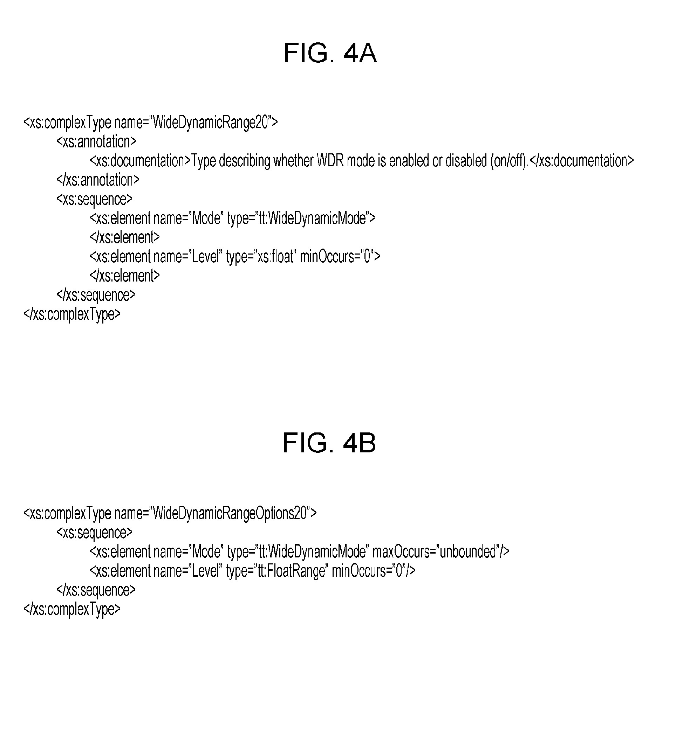

The response includes values relating to settings for wide dynamic range. The values are reflected to the statuses of the radio button 23, radio button 24, compensation level indication area 25, and slide bar 26 on the window 21. How the result of the response to the GetImagingSettings command is reflected to the state of the window 21 will be described below with reference to Figs. 4A and 4B.

In step S308, the client apparatus 113 transmits a GetOptions command to the surveillance camera 1000. It should be noted that the client apparatus 113 designates, in this command, a Token of the VideoSource set in the MediaProfile. On the other hand, the surveillance camera 1000 having received the command returns a response to the command.

Thus, the client apparatus 113 may acquire a settable range of set values of ImagingSettings parameters. For example, this response may include a settable range of values to be set for a wide dynamic range. This range is reflected to the minimum value and maximum value on the left and right side of the radio button 23, radio button 24, and slide bar 26 on the window 21.

How the result of the response to the GetOptions command is reflected to the state of the window 21 will also be described below with reference to Figs. 4A and 4B.

In step S310, the client apparatus 113 starts up an RTSP client. The RTSP client is based on IETF RFC 2326, Real Time Streaming Protocol (RTSP).

In step S311, the surveillance camera 1000 instructs the transmitting unit 110 to transmit an RTP stream. On the other hand, the client apparatus 113 having received the RTP stream having been started to transmit decodes the RTP stream and displays images corresponding to the decoded image data on the video area 22.

In step S312, the client apparatus 113 transmits a SetImagingSettings command containing set values defined for wide dynamic range to the surveillance camera 1000 in the following case. That is, the transmission is performed in a case where a user operates (sets) the radio button 23, radio button 24, and slide bar 26 and then presses the button 27 to apply the settings.

With reference to Figs. 4A and 4B, an example of WideDynamicRange type definition according to this embodiment will be described. Fig. 4A is a partial extraction of a definition based on ONVIF XSD regarding a wide dynamic range function of Imaging.

For example, a SetImagignSettings command and a GetImagingSettings response include data of a data type "tt:ImagingSettings 20".

In other words, the command and the response may use the data to reflect and acquire settings. The wide dynamic range is defined with an element WideDynamicRange included in "tt:ImagingSettings 20".

The WideDynamicRange is defined with a data type "tt:WideDynamicRange 20". Fig. 4A illustrates the data type. Referring to Fig. 4A, an element "Mode" refers to settings for operations of a wide dynamic range function. The "Mode" has a data type "tt:WideDynamicMode", and ON or OFF may be set for the "Mode" value.

The element "Level" represents a setting of a compensation level of the wide dynamic range function. The "Level" has a data type "xs:float", and a floating-point value is settable as a value of the "Level". The "Level" may be omitted by using a minOccurs specifier. The settings for a wide dynamic range function according to this embodiment have been described. However, settings for a dark compensation function may be implemented through similar commands.

The window 21 will be described which are displayed when the client apparatus 113 receives a response to GetImagingSettings in step S307 above. The Mode element of the WideDynamicRange function included in a response to GetImagingSettings may take an ON/OFF value.

If the Mode element has an ON value, the client apparatus 113 changes the state of the radio button 23 to a state where the "enable" is selected. If the Mode element has an OFF value, the state of the radio button 24 is changed to a state where the "disable" is selected.

Also, a Level element may exist in the WideDynamicRange settings included in a response to GetImagingSettings which is received by the client apparatus 113. In this case, the client apparatus 113 displays a value of the Level element in the compensation level indication area 25. The client apparatus 113 further moves a knob of the slide bar 26 to a proper position in accordance with the value of the Level element.

If the Level element has value 0, it means that the compensation level of the wide dynamic range function is automatically set. Thus, the client apparatus 113 changes the state of the radio button 24 to a state where "automatic" is selected. On the other hand, if the Level element has a value excluding 0, the client apparatus 113 changes the state of the radio button 24 to a state where "manual" is selected.

It should be noted that the Level element is an optional (omittable) item settable for the WideDynamicRange included in a response to GetImagingSettings which is received by the client apparatus 113. In a case where the Level element is omitted, the client apparatus 113 changes the state of the radio button 24 to a state where "automatic" is selected.

Next, an operation to be performed by the client apparatus 113 for transmitting a SetImagingSettings command in step S312 above will be described. If the "enable" of the radio button 23 is selected, the client apparatus 113 sets the value of the Mode element in WideDynamicRange included in the command to ON.

On the other hand, if the "disable" of the radio button 23 is selected, the client apparatus 113 sets the value of the Mode element in WideDynamicRange included in the command to OFF.

If the "automatic" of the radio button 24 is selected, the client apparatus 113 omits the Level element itself in WideDynamicRange included in the command. On the other hand, if the "manual" of the radio button 24 is selected, the client apparatus 113 sets a floating-point value set with the slide bar 26 for the value of the Level element in WideDynamicRange included in the command.

Fig. 4B illustrates a partial extraction of definition based on ONVIF XSD regarding a wide dynamic range function of Imaging. For example, a response to GetOptions has the data type "tt:ImagingOptions 20" to describe information on settable values in ImagingSettings and a range of settable values.

The information regarding settable values for wide dynamic range, for example, is represented by an element WideDynamicRange included in the data type "tt:ImagingOptions 20". The element is defined with the data type "tt:WideDynamicRangeOptions 20".

An element Mode of WideDynamicRange included in the response to GetOptions is defined with a data type "tt:WideDynamicMode" and represents a list of settable values for the Mode element. According to this embodiment, ON and OFF are settable values for the Mode element.

A Level element of WideDynamicRange included in the response to GetOptions is defined with a data type "tt:FloatRange". The Level element has "tt:float" types representing a maximum value (Max) that may be designated for the Level element and a minimum value (Min) that may be designated for the Level element as a range of the value that may be designated as the Level element.

This embodiment assumes that the minimum value Min of the Level element is 0.01 and that the maximum value Max is 1.00.

Next, an operation to be performed by the client apparatus 113 when a response to GetOptions is received in step S308 above will be described. The minimum value and maximum value of the compensation level are indicated at the left and right parts of the slide bar 26, as described above. Thus, the client apparatus 113 displays the minimum value and maximum value of the Level element of WideDynamicRange included in the response as the minimum value and maximum value of the compensation level of the slide bar 26.

According to this embodiment, the Mode in the response may take a value ON or OFF and the Level element in this response has Min 0.01 and Max 1.00. However, an embodiment of the present invention is not limited thereto.

For example, a surveillance camera without a wide dynamic range function may be assumed. Under such an assumption, WideDynamicRange of the "tt:WiteDynamicRange" type itself may be omitted in a response to GetOptions.

The client apparatus 113 having received such a response may gray out all setting items in the window 21 to inhibit them from being operated.

For example, a surveillance camera may also be assumed which has a wide dynamic range function that is enabled at all times. Under such an assumption, the value of the Mode element only has ON in a response to GetOptions. The client apparatus 113 having received such a response may gray out the "disable" of the radio button 23 so that it is inhibited to select.

Furthermore, for example, a surveillance camera may be assumed which has a wide dynamic range function whose compensation level is not changeable. Under such an assumption, the Level element may be omitted in a response to GetOptions.

The client apparatus 113 having received such a response may gray out the radio button 24, compensation level indication area 25, and slide bar 26 to disable them.

In this case, the surveillance camera 1000 of this embodiment does not have a wide dynamic range function. Thus, according to this embodiment, the surveillance camera 1000 controls a dark compensation function of the dark compensation unit 106 instead of a wide dynamic range function based on a command to the wide dynamic range function received from the client apparatus 113.

It should be noted that the dark compensation unit 106 may be instructed to set to enable/disable the dark compensation function itself, as described above. In order to set to enable the dark compensation function, the command processing unit 111 may designate an arbitrary value as a compensation level of the dark compensation function. Alternatively, the command processing unit 111 may instruct the dark compensation unit 106 to automatically set a compensation level of the dark compensation function.

The range of the value that may be designated by the command processing unit 111 as a compensation level of the dark compensation function is from a minimum value of 1 to a maximum value of 100.

How values for dark compensation are acquired and set in response to the GetImagingSettings command in step S307, the GetOptions command in step S308, and the SetImagingSettings command in step S312 will be described below.

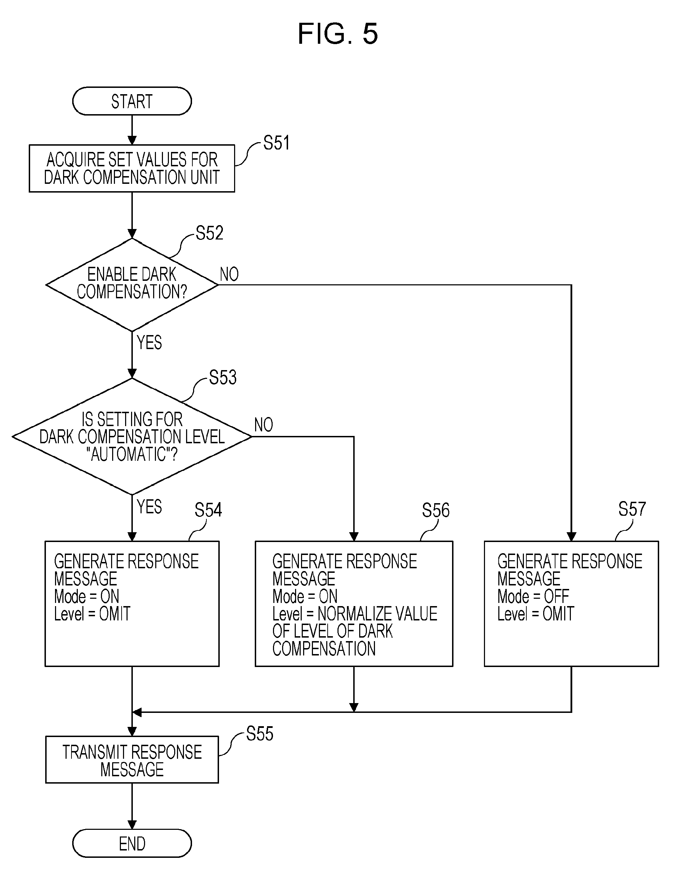

Fig. 5 is a flowchart illustrating GetImagingSettgings command reception processing which is performed if a GetImagingSettings command is received in step S307 in the surveillance camera 1000 according to this embodiment.

This processing is performed by the command processing unit 111. If the command is received, the command processing unit 111 starts the processing. If not, the processing is not started.

In step S51, if the HTTP server 112 receives a GetImagingSettings command, the command processing unit 111 acquires from the dark compensation unit 106 a value for a dark compensation function set in the dark compensation unit 106.

In step S52, the command processing unit 111 determines whether the dark compensation function of the dark compensation unit 106 is enabled or not based on the set value acquired in step S51. If it is determined that the dark compensation function of the dark compensation unit 106 is enabled, the command processing unit 111 moves the processing to step S53. On the other hand, if it is determined that the dark compensation function of the dark compensation unit 106 is not enabled, the command processing unit 111 moves the process to step S57.

In step S53, the command processing unit 111 determines whether a compensation level of the dark compensation function of the dark compensation unit 106 is automatically set or not based on the set value acquired in step S51. In other words, the command processing unit 111 according to this embodiment may has a function as an automatic setting determination unit configured to determine whether a compensation level of the dark compensation function of the dark compensation unit 106 is automatically set or not.

If the command processing unit 111 determines that a compensation level of the dark compensation function of the dark compensation unit 106 is automatically set, the processing moves to step S54. If not on the other hand, the processing moves to step S56.

In step S54, the command processing unit 111 first generates a response to GetImagingSettings. Next, the command processing unit 111 sets to ON the value of the Mode element of WideDynamicRange included in the generated response to GetImagingSetting. Furthermore, the command processing unit 111 omits the Level element in the WideDynamicRange.

In step S55, the command processing unit 111 instructs the transmitting unit 110 to transmit the response to GetImagingSettings generated in the command processing unit 111 to the client apparatus 113 via a network.

In step S56, the command processing unit 111 first generates a response to GetImagingSettings. Next, the command processing unit 111 sets to ON the value of the Mode element of WideDynamicRange included in the generated response to GetImagingSetting.

Furthermore, the command processing unit 111 normalizes the value of the compensation level of the dark compensation function of the dark compensation unit 106 to a value in a predetermined range from 0 to 1 based on the set value acquired in step S51. More specifically, the command processing unit 111 normalizes the value of the compensation level by multiplying the value of the compensation level by 0.01. For example, if the value of the compensation level is a minimum value 1, it is normalized to 0.01. If the value of the compensation level is a maximum value of 100, it is normalized to 1.

The command processing unit 111 sets the normalized value of the compensation level to the value of the Level element of WideDynamicRange included in the generated response to GetImagingSettings.

In step S57, the command processing unit 111 first generates a response to GetImagingSettings. Next, the command processing unit 111 sets to OFF the value of the Mode element of WideDynamicRange included in the generated response to GetImagingSetting. Furthermore, the command processing unit 111 omits the Level element in the WideDynamicRange.

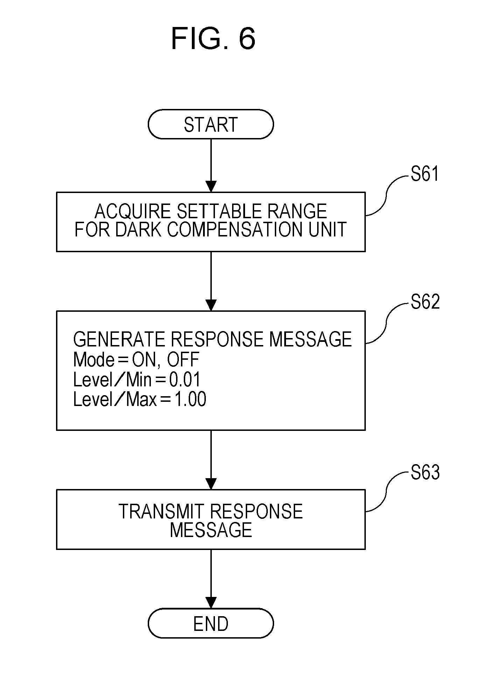

Fig. 6 is a flowchart illustrating GetOptions command reception processing which is performed if a GetOptions command is received in step S308 in the surveillance camera 1000 according to this embodiment.

This processing is performed by the command processing unit 111. If the command is received, the command processing unit 111 starts the processing. If not, the processing is not started.

In step S61, the command processing unit 111 acquires from the dark compensation unit 106 a settable range of a value of the dark compensation function of the dark compensation unit 106.

In step S62, the command processing unit 111 first generates a response to GetOptions. Next, command processing unit 111 sets the value of the generated response to GetOptions based on the settable range acquired in step S61. For example, the command processing unit 111 sets ON or OFF as a value of the Mode element of WideDynamicRange included in the response.

The command processing unit 111 then normalizes and sets a minimum value of the compensation level of the dark compensation function of the dark compensation unit 106 to Min (minimum value) of the Level element of WideDynamicRange included in the generated response to GetOptions.

Furthermore, the command processing unit 111 then normalizes and sets a maximum value of the compensation level of the dark compensation function of the dark compensation unit 106 to MAX (maximum value) of the Level element of WideDynamicRange included in the generated response to GetOptions. Thus, the minimum value of the Level element is set to 0.01, and the maximum value of the Level element is set to 1.00.

In step S63, the command processing unit 111 instructs the transmitting unit 110 to transmit the response to GetOptions generated by the command processing unit 111 client apparatus 113 via a network.

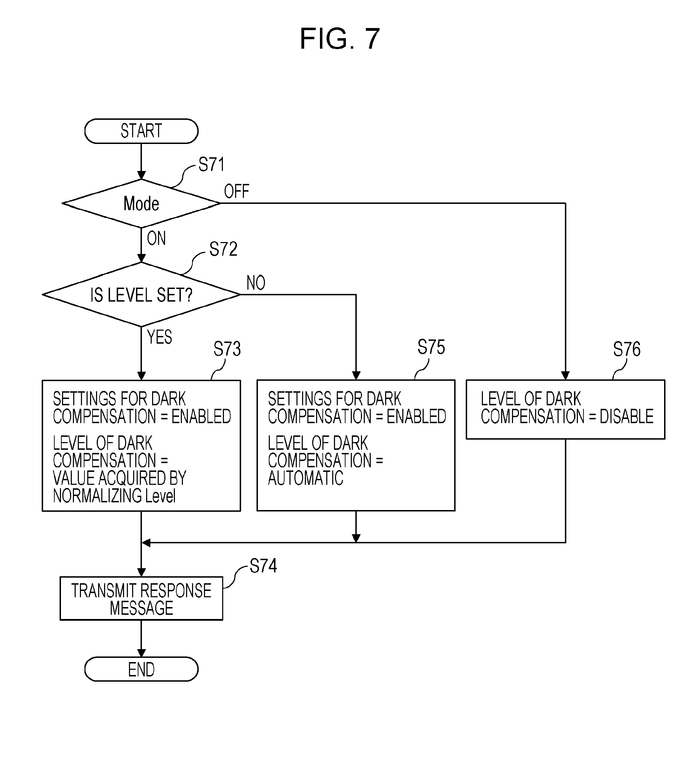

Fig. 7 is a flowchart illustrating SetImagingSettings reception processing which is performed if a SetImagingSettings command is received in step S312 in the surveillance camera 1000 according to this embodiment.

This processing is performed by the command processing unit 111. If the command is received, the command processing unit 111 starts the processing. If not, the processing is not started.

In step S71, the command processing unit 111 determines whether the value of the Mode element of WideDynamicRange included in a SetImagingSettings command received in the HTTP server 112 is ON or OFF.

If the command processing unit 111 determines that the value of the Mode element of WideDynamicRange included in the command is ON, the processing moves to step S72. On the other hand, if the command processing unit 111 determines that the value of the Mode element of WideDynamicRange included in the command is OFF, the processing moves to step S76.

In step S72, the command processing unit 111 determines whether a Level element is set or is omitted in WideDynamicRange included in a SetImagingSettings command received in the HTTP server 112.

If the command processing unit 111 determines a Level element is set in WideDynamicRange included in the command, the processing moves to step S73. On the other hand, if the command processing unit 111 determines a Level element is omitted in WideDynamicRange included in the command, the processing moves to step S75.

In step S73, the command processing unit 111 first enables the dark compensation function of the dark compensation unit 106. Next, the command processing unit 111 normalizes the value of the Level element of WideDynamicRange included in the SetImagingSettings command received by the HTTP server 112 to a value in a predetermined range from 1 to 100.

More specifically, the command processing unit 111 normalizes the value of the compensation level by multiplying the value of the Level element by 100. For example, if the value of the Level element is 0.01, it is normalized to 1. If the value of the Level element is 1.00, it is normalized to 100. In this normalization, the value of the Level element is valid up to the second decimal place and the third and subsequent decimal places are discarded.

The command processing unit 111 sets the normalized value of the Level element to the value of the compensation level of the dark compensation function of the dark compensation unit 106.

In step S74, the command processing unit 111 instructs the transmitting unit 110 to transmit a response message to the client apparatus 113 as a response to the SetImagingSettings command received by the HTTP server 112. That is, a normal response message is transmitted which indicates the command processing has succeeded.

In step S75, the command processing unit 111 first enables the dark compensation function of the dark compensation unit 106. Next, the command processing unit 111 automatically sets the compensation level of the dark compensation function of the dark compensation unit 106.

In step S76, the command processing unit 111 disables the dark compensation function of the dark compensation unit 106.

The surveillance camera 1000 according to this embodiment, as described above, enables the dark compensation function of the dark compensation unit 106 instead of a wide dynamic range function when the surveillance camera 1000 receives a command to enable the wide dynamic range function from the client apparatus 113.

Thus, even the surveillance camera 1000 without a wide dynamic range function may be allowed to image a subject brightly in response to a command to enable a wide dynamic range function.

According to this embodiment, a value in a range from 1 to 100 may be set as the value of the compensation level of the dark compensation unit 106, and a value in a range from 0.01 to 1.00 may be set as the value of the Level of wide dynamic range under ONVIF standard. For that, the command processing unit 111 is configured to perform a normalization process for converting the range of the value of the compensation level to the range of the value of the Level. However, an embodiment of the present invention is not limited to such a configuration.

For example, because the Level of wide dynamic range under ONVIF standard does not have a unit, the command processing unit 111 may be configured such that a value in a settable range from 1 to 100 of the compensation level of the dark compensation unit 106 may directly be handled as a value of the Level of wide dynamic range. The range of the Level of wide dynamic range may be different from the range of the value of the compensation level of the dark compensation unit 106. More specifically, the maximum value or the minimum value may be different values.

For example, in the generation of a response message to a GetOptions command (step S62) in Fig. 6, Min of Level is 1, and Max of Level is 100. In response to the GetImagingSettings command in Fig. 5, the value of the level of dark compensation is directly set to the Level to generate a response message in step 56 above.

In requesting with the SetImagingSettings command in Fig. 7, the value designated as the Level is directly set as the level of dark compensation in step S73.

According to this embodiment, the Level of wide dynamic range defined under ONVIF is in a range from a minimum value of 0.01 to a maximum value of 1.00. However, the range may be from a minimum value of 0.00 to a maximum value of 1.00. The minimum value 0.00 does not mean that nothing is compensated by the wide dynamic range but means that the compensation level of the wide dynamic range is automatically set.

In this case, the Min of the Level is 0.00 and the Max of the Level is 1.00 in the generation of a response message to the GetOptions command (step S62) in Fig. 6. In requesting with the SetImagingSettings command in Fig. 7, when the value designated in the Level is 0.00 in step S73, the level of the dark compensation is automatically set.

In the GetImagingSettings command in Fig. 5, 0.00 is set to a part where the Level is omitted to generate a response message in step S54. Alternatively, only if 0.00 is set to the Level when the wide dynamic range is defined last time, 0.00 may be set to the Level. Normally, the Level is omitted.

This embodiment assumes a surveillance camera which does not have a wide dynamic range function but a dark compensation function which compensates an image having a large brightness difference, similarly to a wide dynamic range function. Even in such an assumed surveillance camera, the definition of a wide dynamic range function provided under ONVIF may be used to control a dark compensation function.

WideDynamicRange included in GetImagingSettings is used in steps S54 to 57, steps S62 and S63, and steps S73 to S76 according to the embodiment described above. However, an embodiment of the present invention is not limited thereto. For example, BacklightCompensation included in GetImagingSettings may be used instead of WideDynamicRange.

It should be noted that a setting including a level parameter may be given priority when commands to set wide dynamic range and to set dark compensation are received in the surveillance camera 1000 according to the aforementioned embodiment. If both of them include a Level parameter, a setting including a higher Level parameter may be given priority.

### Other Embodiments

Embodiments of the present invention can also be realized by a computer of a system or apparatus that reads out and executes computer executable instructions recorded on a storage medium (e.g., non-transitory computer-readable storage medium) to perform the functions of one or more of the above-described embodiment(s) of the present invention, and by a method performed by the computer of the system or apparatus by, for example, reading out and executing the computer executable instructions from the storage medium to perform the functions of one or more of the above-described embodiment(s). The computer may comprise one or more of a central processing unit (CPU), micro processing unit (MPU), or other circuitry, and may include a network of separate computers or separate computer processors. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An imaging apparatus (1000) which communicates with an external apparatus (113) via a network and which does not include synthesizing means for synthesizing a plurality of images captured under different exposure conditions, the imaging apparatus (1000) comprising:
image capturing means (101) configured to image a subject;
receiving means (112)configured to receive a command from the external apparatus (113) via the network;
image processing means configured to perform compensation processing on an exposure of an image without synthesizing a plurality of images;
control means configured to control the image processing means if the receiving means (112) receives a first control command for synthesizing a plurality of images to enlarge a dynamic range; and
transmitting means configured to transmit a no error response to the external apparatus (113) via the network.

2. The imaging apparatus (1000) according to claim 1, further comprising determination means configured to determine whether the first control command received by the receiving means (112) designates an enlargement level of a dynamic range or not, wherein
the control means automatically sets a compensation level of the image processing means if the determination means determines that the enlargement level is not designated.

3. The imaging apparatus (1000) according to claim 1 or 2, further comprising acquiring means configured to acquire a compensation level of the image processing means corresponding to the level designated by the first control command if the determination means determines that it is designated,
wherein the control means controls the image processing means based on the compensation level acquired by the acquiring means.

4. The imaging apparatus (1000) according to claim 1, 2 or 3, further comprising determination means configured to determine whether the first control command received by the receiving means (112)designates 0 as an enlargement level of a dynamic range, wherein
the control means automatically sets a compensation level of the image processing means if the determination means determines that it is designated.

5. The imaging apparatus (1000) according to claim 3, wherein
the control means controls the image processing means based on a compensation level if the receiving means (112)receives a second control command including set values for the image processing means and if the set values for the image processing means in the second control command includes the compensation level; and
a range that may be designated based on a compensation level included in the second control command is different from a range that may be designated based on a compensation level acquired by the acquiring means.

6. The imaging apparatus (1000) according to claim 3, wherein
the control means controls the image processing means based on a compensation level if the receiving means (112)receives a second control command including set values for the image processing means and if the set values for the image processing means in the second control command includes the compensation level; and
a maximum compensation level may be designated based on a compensation level included in the second control command is different from a maximum compensation level may be designated based on a compensation level acquired by the acquiring means.

7. The imaging apparatus (1000) according to claim 3, wherein
if the first control command and the second control command including a compensation value of the image processing means are received and if the determination means determines that one of a level and a compensation level is designated in one of the control commands and the one of the level and the compensation level is not designated in the other control command,
the control means sets, as a compensation level for the image processing means, one of a compensation level corresponding to the level designated by the first control command and a compensation level included in the second control command.

8. The imaging apparatus (1000) according to claim 3, wherein
if the first control command and the second control command including a compensation value of the image processing means are received and if a level and a compensation level are designated in both of the control commands,
the control means sets, as a compensation level for the image processing means, a larger compensation level of a compensation level corresponding to the level designated by the first control command and a compensation level included in the second control command.

9. The imaging apparatus (1000) according to claim 1, 2 or 3, further comprising a transmitting means configured to transmit a set value for controlling the image processing means as a set value regarding enlargement of a dynamic range to the external apparatus (113) via the network if a command for acquiring the set value regarding enlargement of the dynamic range is received by the receiving means.

10. The imaging apparatus (1000) according to claim 7, wherein if a compensation level for a set value for controlling the image processing means is automatically set, a set value regarding enlargement of the dynamic range excluding a compensation level regarding enlargement of the dynamic range is transmitted.

11. The imaging apparatus (1000) according to claim 7, wherein if a compensation level for a set value for controlling the image processing means is automatically set, a set value regarding enlargement of the dynamic range having zero as a compensation level regarding enlargement of the dynamic range is transmitted.

12. The imaging apparatus (1000) according to claim 7, wherein if a compensation level for a set value for controlling the image processing means is set,
a set value regarding enlargement of the dynamic range is transmitted.

13. The imaging apparatus (1000) according to claim 1, 2 or 3, further comprising
transmitting means configured to transmit a settable value regarding the image processing means as a settable value regarding enlargement of a dynamic range to the external apparatus (113) via the network if a command for acquiring the set value regarding enlargement of the dynamic range is received by the receiving means.

14. An imaging system comprising an imaging apparatus (1000) which communicates with an external apparatus (113) via a network, wherein
the external apparatus (113) has
command transmitting means configured to transmit a first control command for synthesizing a plurality of images to enlarge a dynamic range; and
the imaging apparatus (1000) has
image capturing means (101) configured to image a subject;
image processing means configured to perform compensation processing on an exposure of an image without synthesizing a plurality of images;
control means configured to control the image processing means if the first control command is received; and
transmitting means configured to transmit a no error response to the external apparatus (113) via the network.

15. A control method for an imaging apparatus (1000) which communicates with an external apparatus (113) via a network and has image capturing means (101) and an image processing means configured to perform compensation processing on an exposure of an image without synthesizing a plurality of images, the method comprising:
receiving a first control command for synthesizing a plurality of images to enlarge a dynamic range;
controlling the image processing means if the receiving receives the first control command; and
transmitting a no error response to the external apparatus (113) via the network.

16. A computer program causing a computer to execute the control method according to claim 15.

17. A computer-readable storage medium storing the computer program according to claim 16.
